# EUROPÄISCHE PATENTANMELDUNG

(11) **EP 4 620 868 A1**
(43) Veröffentlichungstag der Anmeldung: **24.09.2025**
(21) Anmeldenummer: 25163174.3
(22) Anmeldetag: 12.03.2025
(51) Int. Cl.: B65G 1/04, B65D 19/38

(54) **VORRICHTUNG ZUR ZENTRIERUNG VON PALETTEN ODER PALETTENÄHNLICHEN LADUNGSTRÄGERN MIT EINER MITTELKUFE**

(30) Priorität: 22.03.2024 DE 102024108337
(71) Anmelder: Jungheinrich Aktiengesellschaft, 22047 Hamburg (DE)
(72) Erfinder: ELBERFELD, Jens, 84174 Eching (DE); BECKER, Mirko, 57334 Bad Laasphe (DE); BRAKMANN, Marc, 33649 Bielefeld (DE)
(74) Vertreter: Weickmann & Weickmann PartmbB

(57) **Zusammenfassung**

Die vorliegende Erfindung betrifft eine Vorrichtung (10) zur Zentrierung von Paletten (P) oder palettenähnlichen Ladungsträgern mit einer Mittelkufe, umfassend einen Grundplattenabschnitt (12), welcher sich in einer Erstreckungsrichtung über eine Länge (L) erstreckt, welche im Wesentlichen der Länge der Mittelkufe der Palette (P) entspricht, und an beiden Endbereichen (12a) des Grundplattenabschnitts (12) jeweils drei sich schräg nach oben und von dem Grundplattenabschnitt (12) weg erstreckende Zentrierungswände (14a, 14b), wobei der Abstand (B) der einander gegenüberliegenden seitlichen der Zentrierungswände (14b) im Wesentlichen der Breite der Mittelkufe der Palette (P) entspricht.

## Beschreibung

Die vorliegende Erfindung betrifft eine Vorrichtung zur Zentrierung von Paletten oder palettenähnlichen Ladungsträgern mit einer Mittelkufe, ein System, gebildet aus einer derartigen Vorrichtung und wenigstens einer Palette bzw. einem palettenähnlichen Ladungsträger, sowie ein Regal, umfassend eine derartige erfindungsgemäße Vorrichtung.

Bei der Handhabung von Paletten in Logistikeinrichtungen, beispielsweise bei einem Einlagern derartiger Paletten in Regalsysteme, ist es von entscheidender Bedeutung, dass die Paletten in der gewünschten und angenommenen Weise ausgerichtet und zentriert sind. Es kann sich nämlich beispielsweise bei einem Umlagern von Ladegut ergeben, dass Ungenauigkeiten beim Platzieren und Deplatzieren des Ladeguts auftreten, wodurch eine korrekte Palettenzentrierung nicht mehr vorliegt. Je mehr derartige Ungenauigkeiten sich somit ergeben und anhäufen, beispielsweise durch mehrfaches Umlagern, desto mehr Störungen können im vorgesehenen Betrieb im Zusammenhang mit der Handhabung derartiger Paletten auftreten. Insbesondere ist es möglich, dass ein mit der Handhabung der entsprechenden Palette beauftragtes autonomes Fahrzeug nicht mehr in der Lage sein könnte, die Palette mittels seiner Sensorik zu erkennen und zu handhaben, wenn diese nicht mehr optimal ausgerichtet und/oder zentriert ist.

Wenngleich im Folgenden häufiger die Rede von "Paletten" und "palettenähnlichen Ladungsträgern" sein wird, so sollte verstanden werden, dass die vorliegende Erfindung beliebige geeignete Ladungsträger betreffen soll, welche eine derartige Mittelkufe umfassen, dass eine Wechselwirkung mit der erfindungsgemäßen Vorrichtung in der beabsichtigten Weise möglich ist, wobei die entsprechenden Bezeichnungen im Folgenden austauschbar verwendet werden.

Zum Zweck einer verbesserten Handhabung und unter anderem zur Zentrierung von Paletten, ist beispielsweise aus der EP 3 464 124 A1 eine Anordnung bekannt, mittels welcher in ein Regalsystem einzulagernde Paletten mit Hilfe eines Zentrierrahmens zentriert werden können, wobei gleichzeitig ihre Außenkontur zur weiteren Überprüfung eines korrekten Ladezustands erfasst und ausgewertet werden kann. Hierbei wird die entsprechende Palette im eben genannten Dokument aus dem Stand der Technik über seine Außenkontur zentriert, wobei hierzu eine trichterförmig schräg nach oben abstehende Kontur an der Vorrichtung mit den Maßen der Paletten-Außenkontur verwendet wird.

Die Zentrierung von Ladungsträgern und insbesondere Paletten über deren Außenkontur ermöglicht jedoch lediglich das Zentrieren von Ladungsträgern mit gleichen Außenmaßen und ist daher hinsichtlich der verwendeten Vorrichtung nicht sonderlich flexibel. Insbesondere kann es in der Praxis vorkommen, dass in einzelnen Logistikeinrichtungen verschiedene Ladungsträger verwendet werden, wie beispielsweise Euro-, Industrie-, und Chemiepaletten, welche wiederum gegebenenfalls unterschiedliche Außenabmessungen aufweisen können. Dementsprechend ist es je nach Kombination der genannten Typen von Ladungsträgern zu erwarten, dass verschiedene dieser Ladungsträger auch verschiedene Zentrierrahmen benötigen, sodass hier noch Optimierungspotential hinsichtlich der Flexibilität entsprechender Vorrichtungen besteht.

Es ist somit die Aufgabe der vorliegenden Erfindung, eine verbesserte Vorrichtung zur Zentrierung von Paletten bereitzustellen, mittels welcher unterschiedliche Typen von Paletten zentriert werden können, wodurch wiederum Einsparungen hinsichtlich des finanziellen und zeitlichen Aufwands zum Betrieb einer entsprechenden Logistikeinrichtung erzielt werden können.

Zu diesem Zweck und zur Lösung dieser Aufgabe stellt die vorliegende Erfindung eine Vorrichtung zur Zentrierung von Paletten mit einer Mittelkufe bereit, umfassend einen Grundplattenabschnitt, welcher sich in einer Erstreckungsrichtung über eine Länge erstreckt, welche im Wesentlichen der Länge der Mittelkufe der Palette entspricht, und an beiden Endbereichen des Grundplattenabschnitts jeweils drei sich schräg nach oben und von dem Grundplattenabschnitt weg erstreckende Zentrierungswände, wobei der Abstand der einander gegenüberliegenden seitlichen der Zentrierungswände im Wesentlichen der Breite der Mittelkufe der Palette entspricht.

Auf diese Weise wird es ermöglicht, unterschiedliche Typen von Ladungsträgern nicht mehr über ihre Außenkontur zu zentrieren, sondern vielmehr über ihre Mittelkufe. Hierbei ist zu bedenken, dass unterschiedliche Typen von Ladungsträgern und insbesondere Paletten bekannt sind, welche sich zwar hinsichtlich ihrer Außenmaße unterscheiden, jedoch Mittelkufen mit gleichen Abmessungen aufweisen. Sämtliche derartige Typen von Paletten können dementsprechend in gleicher Weise mit der erfindungsgemäßen Vorrichtung zentriert werden, was nicht analog mit den aus dem Stand der Technik bekannten Zentrierrahmen umzusetzen wäre.

Dementsprechend stellt die vorliegende Erfindung eine Vorrichtung zur Ausrichtung von Paletten bzw. palettenähnlichen Ladungsträgern bereit, welche in Längenrichtung und seitlicher Richtung wirkt, um etwaige Positionsungenauigkeiten zu minimieren. Eine derartige Vorrichtung kann in Palettenregalen, hauptsächlich aber nicht ausschließlich an Kragarmübergabeplätzen, eingesetzt werden, es ist jedoch selbstverständlich im allgemeinsten Fall ebenfalls denkbar, eine derartige Vorrichtung auch an anderen Orten in Logistikeinrichtungen anzuordnen, beispielsweise auch am Boden oder in eigenen Zentrierstationen einzubauen oder anzubringen.

Als weitere funktionelle Komponente kann eine derartige Vorrichtung in bestimmten Ausführungsformen ein Paar von Ausgleichselementen umfassen, welche in den Endbereichen des Grundplattenabschnitts angebracht sind und jeweils eine Auflagefläche umfassen, welche sich im Wesentlichen senkrecht zu dem Grundplattenabschnitt in einer gemeinsamen Ebene erstrecken. Derartige Ausgleichselemente dienen hierbei als weitere Aufstandsflächen oder -bereiche, in welchen eine entsprechende zu zentrierende Palette aufstehen kann, um während des Zentrierungsvorgangs ein Durchbiegen davon zu verhindern oder wenigstens zu minimieren.

Hierbei kann in einer besonders einfachen und kostengünstigen Ausführungsform die Verbindung zwischen den Ausgleichselementen und dem Grundplattenabschnitt in einer lösbaren Weise vorgesehen sein, insbesondere durch eine Formschlussverbindung. Beispielsweise könnten die Ausgleichselemente durch Ausnehmungen im Bereich des Grundplattenabschnitts bzw. der Zentrierungswände hindurchgeschoben und formschlüssig eingesteckt oder verkeilt werden, wodurch eine werkzeuglose Montage sowie Demontage der Ausgleichselemente von dem Grundplattenabschnitt problemlos möglich werden.

Wenngleich die Abstände der in Längsrichtung liegenden Zentrierungswände sowie der Paare von seitlichen Zentrierungswänden auf die entsprechenden Typen von zu handhabenden Paletten bzw. palettenähnlichen Ladungsträgern angepasst werden können, so bietet sich insbesondere eine Ausgestaltung einer entsprechenden Vorrichtung an, in welcher der Abstand der in Längsrichtung liegenden Zentrierungswände zwischen etwa 595mm und etwa 2400mm und/oder der Abstand der seitlichen Zentrierungswände zwischen etwa 40mm und etwa 250mm beträgt. Diese Abmessungen sind derart zu verstehen, dass die entsprechenden Wände in ihrem Übergangsbereich zu dem Grundplattenabschnitt mit einem entsprechenden Abstand versehen sind, sodass die trichterförmig zulaufenden Zentrierungswände den Aufstandsbereich der Mittelkufe der zu zentrierenden Palette auf einen entsprechenden Bereich zentrieren. Die genannten Abmessungen entsprechen hierbei gerade einer Europalette, es sind jedoch auch andere Palettentypen mit Mittelkufen von derartigen Abmessungen bekannt, sodass eine erhöhte Flexibilität der erfindungsgemäßen Vorrichtung bei diesen konkreten Werten in jedem Fall erzielt wird.

Um die Flexibilität der erfindungsgemäßen Vorrichtung noch weiter zu erhöhen, kann diese ferner einen Rüstsatz zur Verjüngung der Zentrierungswände an wenigstens einem Endbereich des Grundplattenabschnitts in Erstreckungsrichtung des Grundplattenabschnitts und/oder in wenigstens einer Richtung senkrecht zu der Erstreckungsrichtung umfassen. Durch das Anbringen eines solchen Rüstsatzes können in einfacher Weise die Abstände der Zentrierungswände in Längsrichtung und/oder in seitlicher Richtung verringert werden, um die Vorrichtung auf andere Typen von Paletten bzw. palettenähnlichen Ladungsträgern umzurüsten. Auch diese Umrüstung ist wesentlich einfacher durchzuführen, als dies beim Umrüsten einer entsprechenden Zentrierungsvorrichtung für eine Außenkontur einer Palette der Fall wäre, da wesentlich weniger Teile zu montieren und abzumontieren sind und somit der Gesamtaufwand für das Umrüsten zusätzlich zu der ohnehin schon erhöhten Flexibilität verringert wird.

Hierbei versteht sich, dass abhängig von den zu handhabenden erwarteten Typen von Paletten bzw. palettenähnlichen Ladungsträgern die Vorrichtung auch mehrere derartige Rüstsätze mit unterschiedlichen Abmessungen umfassen kann, welche selektiv montiert oder demontiert werden können, je nachdem, welcher Typ oder welche Typen von Ladungsträgern aktuell in der entsprechenden Logistikeinrichtung gehandhabt werden.

Hierbei kann für eine besonders einfache Montage der wenigstens eine Rüstsatz dazu eingerichtet sein, mittels an der oder den entsprechenden Zentrierungswänden vorgesehenen Durchbrechungen montiert zu werden, sodass beispielsweise durch ein Einschrauben oder ein Aufstecken entsprechender Gegenelemente eine feste und sichere Montage des entsprechenden Rüstsatzes an der erfindungsgemäßen Vorrichtung ermöglicht wird.

Hierbei kann der wenigstens eine Rüstsatz unter anderem im Fall der oben genannten konkreten Abstände der Zentrierungswände in Längsrichtung bzw. seitlicher Richtung dazu eingerichtet sein, eine Verjüngung der in Längsrichtung liegenden Zentrierungswände zu erlauben und/oder eine Verjüngung der seitlichen Zentrierungswände zu erlauben. Durch diese Verjüngung werden zusätzlich zu Europaletten und anderen Palettentypen mit identischen Mittelkufen noch zahlreiche weitere Palettentypen abgedeckt, welche durch ein entsprechendes Rüsten der erfindungsgemäßen Vorrichtung im Nachgang zentriert werden können.

In ähnlicher Weise wie die oben bereits angesprochene Vorrichtung aus dem Stand der Technik könnte die vorliegende erfindungsgemäße Vorrichtung ebenfalls eine Einheit zur Konturenkontrolle umfassen, welche dazu eingerichtet ist, zu erfassen, ob sich eine auf dem Grundplattenabschnitt aufstehende Palette bzw. ein palettenähnlicher Ladungsträger sowie ggf. davon getragene Objekte innerhalb einer vordefinierten Kontur befinden. Die entsprechende Konturenkontrolle kann hierbei beispielsweise über optische Sensoren sowie eine Auswertung der davon erzeugten Bilder oder ähnliche bekannte Typen von Sensoren stattfinden.

Gemäß einem weiteren Aspekt betrifft die vorliegende Erfindung ein System, welches gebildet ist aus einer Vorrichtung der eben beschriebenen Art sowie wenigstens einer Palette oder einem palettenähnlichen Ladungsträger eines ersten Typs, welche/r eine Mittelkufe aufweist, deren Länge im Wesentlichen der Länge des Grundplattenabschnitts der Zentrierungsvorrichtung entspricht, und deren Breite im Wesentlichen dem Abstand von seitlichen der Zentrierungswände entspricht, jeweils gegebenenfalls unter Verwendung eines Rüstsatzes. Hierbei versteht sich, dass durch die flexible Verwendung der erfindungsgemäßen Vorrichtung und den Einsatz der Mittelkufe entsprechender Paletten zu deren Zentrierung selbstverständlich auch mehrere Paletten oder palettenähnliche Ladungsträger unterschiedlicher Typen in dem beanspruchten System umfasst sein können, bei zusätzlicher Verwendung des bereits beschriebenen Rüstsatzes auch mit unterschiedlichen Abmessungen ihrer jeweiligen Mittelkufen.

Beispiele von entsprechenden Paletten bzw. palettenähnlichen Ladungsträgern, welche in einem derartigen System kombiniert werden können, sind unter anderem die Typen Europalette, Industriepalette, CP1, CP2, CP3, CP4 oder CP5.

Zuletzt betrifft die vorliegende Erfindung auch noch ein Regal, insbesondere ein Palettenregal oder Kragarmregal, umfassend eine erfindungsgemäße Vorrichtung der oben beschriebenen Art, um bereits eine Integration einer derartigen Zentriervorrichtung in ein Regal zur Aufnahme der Paletten bzw. palettenähnlichen Ladungsträger zu ermöglichen.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1:: eine isometrische Ansicht einer erfindungsgemäßen Zentrierungsvorrichtung;
- Figur 2:: eine isometrische Ansicht eines Ausgleichselements, welches einen Teil der Vorrichtung aus Figur 1 bilden kann;
- Figur 3a:: eine isometrische Ansicht der Komponenten aus den Figuren 1 und 2 in montiertem Zustand;
- Figur 3b:: die Vorrichtung aus Figur 3a in einer Draufsicht;
- Figur 4:: die Vorrichtung aus der Figur 3a mit einem zusätzlich installierten Rüstsatz in isometrischer Ansicht; und
- Figur 5:: ein Kragarmregal, welches mit der Vorrichtung aus Figur 1 versehen ist, in einer schematischen Draufsicht.

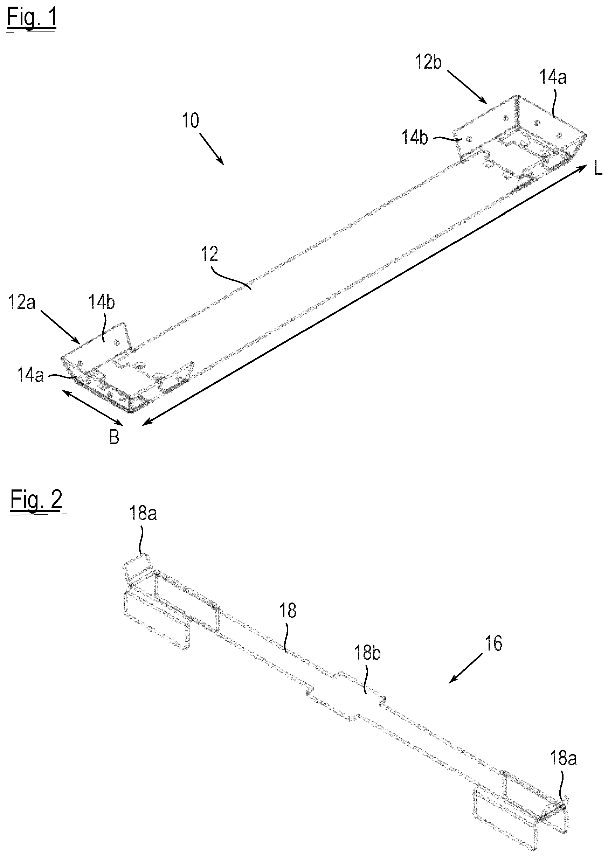

In der Figur 1 ist zunächst einmal eine erfindungsgemäße Vorrichtung zur Zentrierung von Paletten oder palettenähnlichen Ladungsträgern mit einer Mittelkufe in ihrer einfachsten Form in einer isometrischen Ansicht gezeigt und ganz allgemein mit dem Bezugszeichen 10 bezeichnet. Die Vorrichtung 10 umfasst hierbei einen länglichen Grundplattenabschnitt 12 von vorbestimmter Länge L und Breite B, welcher als Auflagefläche für eine zu zentrierende Palette bzw. einen palettenähnlichen Ladungsträger dient. Die Länge L sowie die Breite B des Grundplattenabschnitts 12 sind hierbei derart gewählt, dass unterschiedliche Typen von Paletten oder palettenähnlichen Ladungsträgern mit unterschiedlichen Außenabmessung, jedoch gleich aufgebauten Mittelkufen, in gleicher Weise zentriert werden können.

Um nun die gewünschte Zentrierungswirkung bei einem Aufstellen einer Palette ermöglichen zu können, sind an den beiden Endbereichen 12a und 12b des Grundplattenabschnitts 12 jeweils drei sich schräg nach oben und von dem Grundplattenabschnitt 12 weg erstreckende Zentrierungswände vorgesehen, wobei die einander in Längsrichtung gegenüber liegenden Zentrierungswände mit dem Bezugszeichen 14a bezeichnet sind, während die einander in seitlicher Richtung gegenüber liegenden Paare von Zentrierungswänden jeweils mit 14b bezeichnet sind. Bei einem Aufsetzen einer Palette bzw. eines palettenähnlichen Ladungsträgers mit seiner Mittelkufe im Bereich der Zentrierungswände 14a, 14b wird dieser durch die Trichterwirkung davon nach unten bis zu dem Grundplattenabschnitt 12 abgleiten und dort zentriert in einer wohldefinierten Ausrichtung aufstehen.

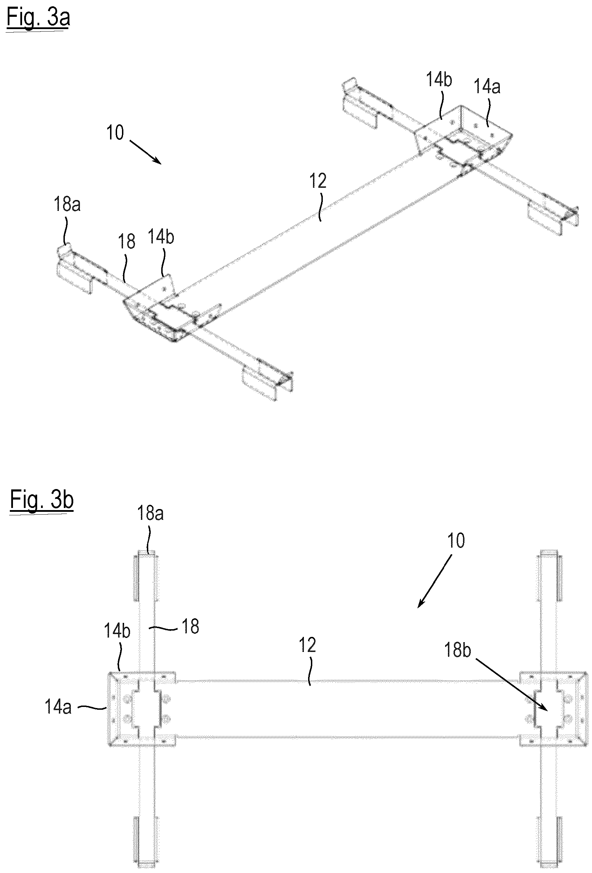

Des Weiteren sei nun auf die Figur 2 verwiesen, welche in einer isometrischen Ansicht ein Ausgleichselement 16 darstellt, welches einen Teil der Vorrichtung 10 aus Figur 1 bilden kann, wie insbesondere in den Figuren 3a und 3b nachzuvollziehen, in welchen zwei derartige Ausgleichselemente 16 an dem Grundplattenabschnitt 12 montiert worden sind.

Die Ausgleichselemente 16 erstrecken sich hierbei entlang der Breitenrichtung des Grundplattenabschnitts 12 in einer Ebene damit und dienen als zusätzliche Auflagefläche für weitere Abschnitte der zu zentrierenden Palette, beispielsweise ihrer Eckklötze.

Zu diesem Zweck weisen die Ausgleichselemente 16 in ähnlicher Weise wie der Grundplattenabschnitt 12 einen jeweiligen flächigen Bereich 18 auf, welcher optional wiederum an seinen Endabschnitten mit sich schräg nach oben erstreckenden Wänden 18a versehen sein kann, welche ebenfalls eine gewisse Zentrierungswirkung beim Aufsetzen einer Palette entfalten können. Dementsprechend kann es vorteilhaft sein, in ähnlicher Weise wie weiter unten im Zusammenhang mit dem Rüstsatz 20 erläutert, mehrere entsprechende Ausgleichselemente 16 vorzuhalten, um auch an dieser Stelle eine Anpassung der Vorrichtung 10 an unterschiedliche zu zentrierende Ladungsträger bei Bedarf vornehmen zu können.

Ferner sei auf den verbreiteten Abschnitt 18b im zentralen Bereich des flächigen Bereichs 18 des Ausgleichselements 16 verwiesen, mittels welchem durch eine Formschlussverbindung in einer lösbaren Weise die in den Figuren 3a und 3b gezeigte Kombination des Grundplattenabschnitts 12 mit den Ausgleichselementen 16 erzielt werden kann. Hierbei sind Durchbrechungen in dem Grundplattenabschnitt 12 sowie im Bereich dessen Übergangs zu den seitlichen Zentrierungswänden 14b vorgesehen, durch welche hindurch das entsprechende Ausgleichselement 16 eingeschoben werden kann, wobei es anschließend durch geeignetes Ausrichten an dem Grundplattenabschnitt 12 verkeilt wird und dementsprechend werkzeuglos daran montiert und auch wieder davon abmontiert werden kann.

Insbesondere in Figur 3b ist dementsprechend nachzuvollziehen, dass bei einer senkrechten Draufsicht auf die montierte Vorrichtung 10 sowohl die die Zentrierungswirkung hervorrufenden Zentrierungswände 14a, 14b als auch die zusätzlichen Seitenwände 18a der Ausgleichselemente 18 zu erkennen sind, während ferner der Grundplattenabschnitt 12 zusammen mit dem Ausgleichselement 18 eine relativ großflächige Auflage für eine entsprechende zu zentrierende Palette bzw. einen palettenähnlichen Ladungsträger ermöglicht.

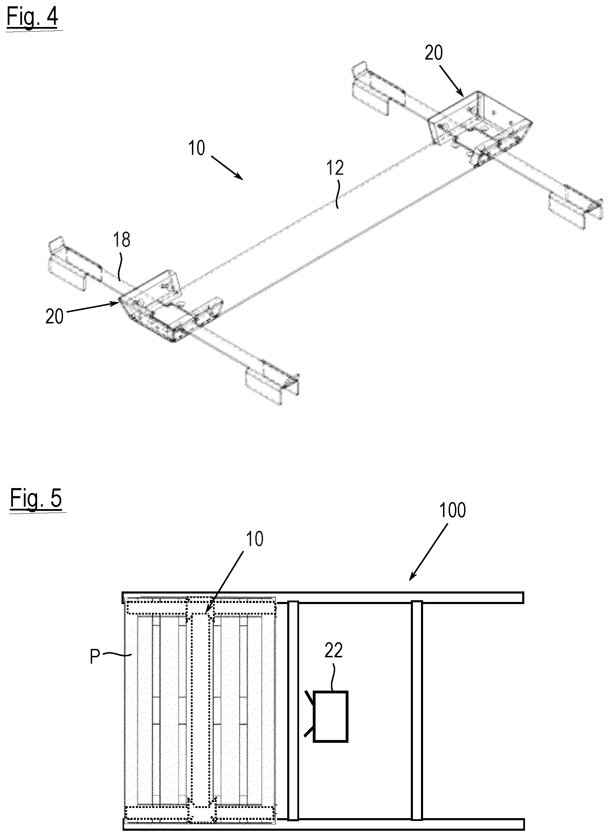

Weiterhin auf die Figur 4 verwiesen, welche in ähnlicher Weise wie die Figur 3a die erfindungsgemäße Vorrichtung 10 zeigt, welche jedoch um einen Rüstsatz 20 ergänzt worden ist, dessen einzelne Komponenten an den jeweiligen Innenseiten der Zentrierungswände 14a, 14b mittels einer Verschraubung an entsprechenden in den Zentrierungswänden 14a, 14b vorgesehenen Löchern montiert worden sind.

Indem hierbei die Wandstärke der einzelnen Komponenten des Rüstsatzes 20 geeignet gewählt wird, können die Bemaßungen hinsichtlich der Länge L beziehungsweise der Breite B an der Vorrichtung 10 eingestellt werden, wodurch in einfacher Weise ermöglicht wird, die Vorrichtung 10 auf abweichende Typen von Paletten bzw. palettenähnlichen Ladungsträgern umzurüsten, welche verringerte Abmessungen ihrer Mittelkufen aufweisen. Indem hierbei die einzelnen Komponenten des Rüstsatzes 20 in geeigneter Weise Parallelogramm-Formen aufweisen, wird die Trichterform davon auch mit angebrachtem Rüstsatz beibehalten, sodass die Zentrierungswirkung durch das Abgleiten an den trichterförmigen Wänden hierdurch nicht beeinträchtigt oder verschlechtert wird.

Zuletzt sei auch noch auf Figur 5 hingewiesen, welche in ganz allgemeiner Form ein erfindungsgemäßes Regal 100 in Form eines Kragarmregals zeigt, wobei an einem entsprechenden Kragarm eine Vorrichtung 10 der oben beschriebenen Art angebracht und zur besseren Sichtbarkeit gestrichelt dargestellt ist.

Auf dieser Vorrichtung 10 ist bereits eine Palette P getragen und zentriert dargestellt. Somit bietet sich durch die Integration der Vorrichtung 10 in das Regal 100 die Möglichkeit, eine entsprechende Zentrierung unmittelbar an einer Stelle in einer Logistikvorrichtung vorzunehmen, an welcher eine korrekte Ausrichtung und Zentrierung einer solchen Palette P nachfolgend benötigt wird. Der Vollständigkeit halber ist in Figur 5 ferner rein schematisch eine Einheit zur Konturenkontrolle 22 dargestellt, welche dazu eingerichtet ist, zu erfassen, ob die auf dem Grundplattenabschnitt 12 aufstehende Palette P sowie ggf. davon getragene Objekte sich innerhalb einer vordefinierten Kontur befinden.

## Patentansprüche

1. Vorrichtung (10) zur Zentrierung von Paletten (P) oder palettenähnlichen Ladungsträgern mit einer Mittelkufe, umfassend:
- einen Grundplattenabschnitt (12), welcher sich in einer Erstreckungsrichtung über eine Länge (L) erstreckt, welche im Wesentlichen der Länge der Mittelkufe der Palette (P) entspricht; und
- an beiden Endbereichen (12a) des Grundplattenabschnitts (12) jeweils drei sich schräg nach oben und von dem Grundplattenabschnitt (12) weg erstreckende Zentrierungswände (14a, 14b), wobei der Abstand (B) der einander gegenüberliegenden seitlichen der Zentrierungswände (14b) im Wesentlichen der Breite der Mittelkufe der Palette (P) entspricht.

2. Vorrichtung (P) nach Anspruch 1,
ferner umfassend ein Paar von Ausgleichselementen (16), welche in den Endbereichen des Grundplattenabschnitts (12) angebracht sind und jeweils eine Auflagefläche (18) umfassen, welche sich im Wesentlichen senkrecht zu dem Grundplattenabschnitt (12) in einer gemeinsamen Ebene erstrecken.

3. Verrichtung (10) nach Anspruch 2,
wobei die Verbindung zwischen den Ausgleichselementen (16) und dem Grundplattenabschnitt (12) in einer lösbaren Weise vorgesehen ist, insbesondere durch eine Formschlussverbindung.

4. Vorrichtung (10) nach einem der vorhergehenden Ansprüche,
wobei der Abstand der in Längsrichtung liegenden Zentrierungswände (14a) zwischen etwa 595mm und etwa 2400mm beträgt und/oder der Abstand der seitlichen Zentrierungswände (14b) zwischen etwa 40mm und etwa 250mm beträgt.

5. Vorrichtung (10) nach einem der vorhergehenden Ansprüche,
ferner umfassend einen Rüstsatz (20) zur Verjüngung der Zentrierungswände (14a, 14b) an wenigstens einem Endbereich des Grundplattenabschnitts (12) in Erstreckungsrichtung des Grundplattenabschnitts (12) und/oder in wenigstens einer Richtung senkrecht zu der Erstreckungsrichtung.

6. Vorrichtung (10) nach Anspruch 5,
wobei der wenigstens eine Rüstsatz (20) dazu eingerichtet ist, mittels an der oder den entsprechenden Zentrierungswänden (14a, 14b) vorgesehenen Durchbrechungen montiert zu werden.

7. Vorrichtung (10) nach Anspruch 4 und einem der Ansprüche 5 und 6, wobei der Rüstsatz (20) eine Verjüngung der in Längsrichtung liegenden Zentrierungswände (14a) erlaubt und/oder eine Verjüngung der seitlichen Zentrierungswände (14b) erlaubt.

8. Vorrichtung (10) nach einem der vorhergehenden Ansprüche,
ferner umfassend eine Einheit (22) zur Konturenkontrolle, welche dazu eingerichtet ist, zu erfassen, ob eine auf dem Grundplattenabschnitt (12) aufstehende Palette (P) oder ein palettenähnlicher Ladungsträger sowie ggf. davon getragene Objekte sich innerhalb einer vordefinierten Kontur befinden.

9. System, gebildet aus einer Vorrichtung (10) nach einem der vorhergehenden Ansprüche und wenigstens einer Palette (P) oder einem palettenähnlichen Ladungsträger eines ersten Typs, welche/r eine Mittelkufe aufweist, deren Länge im Wesentlichen der Länge (L) des Grundplattenabschnitts (12) der Zentrierungsvorrichtung (10) entspricht und deren Breite (B) im Wesentlichen dem Abstand von seitlichen der Zentrierungswände (14b) entspricht, jeweils ggf. unter Verwendung eines Rüstsatzes (20).

10. System nach dem vorhergehenden Anspruch,
wobei die wenigstens eine Palette (P) bzw. der palettenähnliche Ladungsträger vom Typ Europlatte, Industriepalette, CP1, CP2, CP3, CP 4 oder CP5 ist.

11. Regal (100), insbesondere Palettenregal oder Kragarmregal, umfassend eine Vorrichtung (10) nach einem der Ansprüche 1 bis 8.
